(19) Europäisches Patentamt

European Patent Office

Office européen des brevets

(11) EP 0 404 005 B1

(12) EUROPEAN PATENT SPECIFICATION

(45) Date of publication and mention
of the grant of the patent:
05.03.1997 Bulletin 1997/10

(51) Int Cl.⁶: **G11B 7/24**

(21) Application number: 90111430.6

(22) Date of filing: 18.06.1990

(54) **Optical information recording medium**

Optischer Informationsaufzeichnungsträger

Support d'enregistrement optique

(84) Designated Contracting States:
**DE FR GB IT NL**

(30) Priority: 19.06.1989 JP 156533/89
06.07.1989 JP 174703/89

(43) Date of publication of application:
27.12.1990 Bulletin 1990/52

(73) Proprietor: **MATSUSHITA ELECTRIC INDUSTRIAL
CO., LTD.
Kadoma-shi, Osaka-fu 571 (JP)**

(72) Inventors:
• **Inoue, Kazuo
Higashiyodogawa-ku, Osaka-shi (JP)**
• **Ohta, Takeo
Omiyacho-4-chome, Nara-shi (JP)**
• **Uchida, Masami
Hirakata-shi (JP)**
• **Yoshioka, Kazumi
Yawata-shi (JP)**
• **Furukawa, Shigeaki
Shiki-gun, Nara-ken (JP)**

(74) Representative: **Patentanwälte
Leinweber & Zimmermann
Rosental 7
80331 München (DE)**

(56) References cited:
EP-A- 0 239 390     EP-A- 0 265 204
EP-A- 0 319 037

• **PATENT ABSTRACTS OF JAPAN vol. 10, no. 266
(P469)(2322), 11 September 1986; &
JP-A-6292448**

**Description**

BACKGROUND OF THE INVENTION

Field of the Invention

The present invention relates to an optical information recording medium of high memory capacity in which information is recorded or erased by elevating the temperature of an active layer by irradiation with a light such as a laser beam to bring about phase change.

Description of the Prior Art

Since S.R. Ovsinsky et al disclose in U.S. Patent No. 3,530,441 that thin films of, for example, $Te_{85}Ge_{15}$, $Te_{81}Ge_{15}S_2Sb_2$, and the like undergo reversible phase change by irradiation with a laser beam or the like, development of optical information recording mediums in which a chalcogenide alloy thin film is used as an active layer and recording, reproducing and erasing can be carried out, has been hastened.

Regarding the construction of such optical information recording mediums, GB-A-2079031 discloses an optical information recording medium of a three-layer construction comprising an active layer comprising a chalcogenide alloy thin film and a reflection layer comprising a metallic thin film having a high light reflectivity such as Au and Al, between which an intermediate layer is inserted. This aims at enhancement of sensitivity by increasing a light absorption rate utilizing the interference effect of light. Furthermore, Heyman et al disclose constructions having an active layer, both the sides of which are covered with protective layers (Philip M. Heyman, Proceedings of SPIE, Optical Storage Media, 420, 162 (1983)). Some of them have a reflection layer and the others have no reflection layer. These constructions also utilize the interference of light. However, at present, an active layer comprising a chalcogenide alloy is widely used for retaining the shape of the layer when molten by irradiation with a laser beam. One object for developing this optical information recording medium is to improve the number of rewriting cycles of recording and erasing of information. Japanese Patent Kokai (Laid-Open) No. 61-92448 discloses an optical information recording medium comprising an active layer and a resin substrate, between which is provided an intermediate layer having a coefficient of linear expansion of $1 \times 10^{-5}$/K or less. This is for inhibition of occurrence of cracks in the active layer owing to linear expansion. Moreover, Japanese Patent Kokai (Laid-Open) No. 63-187435 discloses an optical information recording medium in which a thermally conductive thin film having a higher thermal conductivity than that of the active layer is provided adjacent to the active layer. This is for reducing the difference in temperature at the central part and at the edge portion of a recording track to inhibit thermal damages and to increase the number of rewriting cycles. However, the number of rewriting cycles has still been limited in the conventional optical information recording mediums. This limitation is due to the generation of pinholes. (See, M. Chen, et al., Applied Physics Letters, 49, 9, 502(1986)). That is, with increase in the number of rewriting cycles, pinholes of several tens in nm in diameter are uniformly generated on the recording track of the optical information recording medium and the pinholes grow with increase of the number of rewriting cycles.

EP-A-0239 390 discloses a bi-layer structure as the structure of the protective layers. The protective layers comprise a first protective layer on the side of the recording layer and a second protective layer on the opposite side. The first protective layer protects the recording layer from being oxidized and corroded, and the second protective layer is made of a material having a lower coefficient of thermal conductivity than that of the material of the first protective layer to inhibit the dissipation of heat from the recording layer.

EP-A-0319 037 discloses an optical information recording medium provided with a recording layer capable of changing reversibly between two optically detectable states in response to light irradiation conditions. The two states in the recording layer have the same optical absorbance at the wavelength of the irradiation light, cf. claim 1 of the afore-mentioned document. According to the summary thereof, with the aim of obtaining a high erasing ratio in overwriting using a single laser beam, a constitutional medium has been deviced whereby the same temperature rise profile can be obtained for both, the recorded mark part and the unrecorded (erased) part of the recording film. The optical absorbance characteristics are set by a proper selection of the layer thicknesses.

SUMMARY OF THE INVENTION

The object of the present invention is to provide an optical information recording medium in which the generation of pinholes in an active layer at the time of rewriting is inhibited.

To this end, the mechanism of generation of pinholes will be explained.

The active layer is heated by light irradiated to the optical information recording medium for recording of information and is molten, but protective layers formed on both the sides of the active layer are higher in melting point than the active layer and so they are not molten. Since the temperature of the protective layer decreases with increase in distance in the direction of thickness from the active layer side, the protective layer deforms in the form of convex in its active layer side. As a result, the materials of the active layer are excluded outside the record mark portion and cannot return upon cooling to produce fine pinholes.

Therefore, according to the present invention, the deformation of the protective layer due to thermal expansion which is the cause for the generation of pinholes is reduced.

For reducing the above-mentioned formation of the protective layer, an optical information medium is provided with features as laid down in claims 1, 3, 6 and 8, respectively.

Preferred embodiments are claimed in the subclaims.

In other words, firstly, a material of a high thermal conductivity is used as a metal reflection layer for the rapid dissipation of heat from the protective layers; and secondly, the protective layer is to have a bi-layer structure comprising a material of a low thermal expansion coefficient and a material of a high thermal expansion coefficient in order to inhibit the bimetal deformation of the protective layer. Furthermore, there is employed such structure that the temperature of the active layer does not change with change in thickness of the layer in order to inhibit the change of thickness even when the thickness of the active layer becomes locally ununiform due to the deformation of the protective layer owing to thermal expansion. By employing the above construction, the generation of pinholes is inhibited and the number of rewriting cycles of recording and erasing of information in the optical information recording medium is markedly increased.

## BRIEF DESCRIPTION OF THE DRAWINGS

Fig. 1(a) and (b) are cross-sectional views which show the constructions of optical information recording mediums of the first, third and fourth examples of the present invention.

Fig. 2(a) and (b) are cross-sectional views which show the constructions of optical information recording mediums of the second example of the present invention.

Fig. 3(a) and (b) and Fig. 4(a) and (b) show a relation between the light absorption rate and thickness of the active layer of the optical information recording medium of the fifth example of the present invention.

## DESCRIPTION OF THE PREFERRED EMBODIMENTS

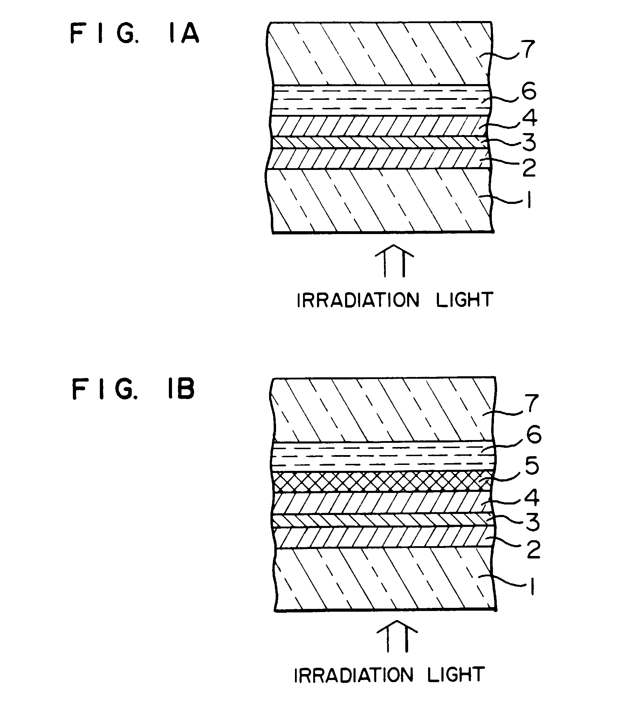

First, some examples of the constructions of the main optical information recording mediums of the present invention are shown in Fig. 1(a) and (b). In Fig. 1(a), substrate 1 is made of a transparent material such as glass, a polycarbonate resin, or the like. On substrate 1 are laminated first protective layer 2, active layer 3, and second protective layer 4 in succession by a vacuum thin film depositing process such as sputtering process and the resulting laminate is bonded to protective plate 7 through adhesive 6. In Fig. 1(b), on substrate 1 are laminated first protective layer 2, active layer 3, second protective layer 4 and reflection layer 5 in succession and the resulting laminate is bonded to protective plate 7 through adhesive 6. Protective plate 7 may be made of the same material as of substrate 1 or a metal which does not transmit light. In the case of Fig. 1, light enters from the side of substrate 1.

The first protective layer 2 and second protective layer 4 serve to inhibit the deformation of substrate 1, adhesive 6 or protective plate 7 due to the elevation of the temperature of active layer 3 caused by irradiation with light.

Furthermore, active layer 3 absorbs energy of a laser beam and once melts in recording of information in the optical information recording medium. Therefore, the melting point of the first protective layer 2 and that of the second protective layer 4 must be higher than that of active layer 3.

Moreover, only the first protective layer 2 in the case of the construction shown in Fig. 1(a) and the first protective layer 2, the second protective layer 4 and the reflection layer 5 in the case of the construction shown in Fig. 1(b) act to increase the amount of reflected light between the different solid states of the active layer which is converted to recorded information signal by interference of light. Therefore, in order to efficiently supply incident light to active layer 3, first protective layer 2 and second protective layer 4 must have no absorbability for a wavelength of incident light.

As an example of the construction of the optical information recording medium, a single side adhering structure is shown, but it may be a double side adhering structure or sandwich structure.

Materials for active layer 3 includes, for example, such types as GeTe, GeTeSb, GeTeSn, GeTeSi, GeTeSbSe, GeTeSnZn, BiTe, InSb, InSe, InTe, InSbTe, AsSe, and AsTe. Especially preferred are GeTeSb type materials.

Materials for the protective layer include, for example, oxides, nitrides and sulfides of element selected from Si, Al, Ta, Ti, Zn, Sb, Y, Ge, Zr, Sn, Nb, V, Mg, and the like and mixtures of these compounds.

Materials for the reflection layer include, for example, those which are mainly composed of at least one of Ag, Au, Al, Cu, Cr, Ni, Pt and W.

In the following, a first example of the present invention will be explained.

The optical information recording medium has the structure shown in Fig. 1(b). In Fig. 1(b), 1 indicates a substrate and irradiation light enters from the under side of substrate 1. On this substrate 1 are laminated first protective layer 2, active layer 3, second protective layer 4 and reflection layer 5 in succession by a vacuum thin film forming method such as a sputtering method. The resulting laminate was bonded to protective plate 7 through adhesive 6.

In the second example, the thermal conductivity of reflection layer 5 of this optical information recording medium is made higher than a certain value.

In this second example, reflection layer 5 of a high thermal conductivity is used as heat sink and thus, dissipation of heat from active layer 3 through second projective layer 4 is increased. As a result, the elevation of the temperature of first protective layer 2 and second protective layer 4 is inhibited near recording mark to reduce the amount of deformation of these protective layers towards active layer 3 due to thermal expansion.

Table 1 shows experimental results on the number of rewriting cycles when the thermal conductivity of a material and the thickness of reflection layer 5 and the thickness of second protective layer 4 were changed. For the experiment, optical information recording mediums were used in which an active layer comprised a GeTeSb type material and had a thickness of 20 nm, protective layers comprised a mixture of ZnS and $SiO_2$ and the first protective layer had a thickness of 140 nm. The content of $SiO_2$ was 20 mol%. The bit error rate was measured by overwriting a random pattern signal of (2,7)RLLC of the maximum recording frequency of 3.43 MHz by irradiating a laser beam of 830 nm in wavelength stopped-down to a spot diameter of 1 μm to active layer of the optical information recording medium rotated at 1800 rpm. The bit error rate was obtained by bit-by-bit comparing the amount of information to be recorded in the optical information recording medium with the reproduced amount of the recorded information. The number of rewriting cycles was defined to be the number until the bit error rate reached the order of $10^{-4}$. The initial value was the order of $10^{-6}$.

EP 0 404 005 B1

Table 1

| Reflection layer | | | Second protective layer | The number of rewriting cycles |
|---|---|---|---|---|
| Material | Thermal conductivity (W/mK) | Thickness (nm) | Thickness (nm) | (time) |
| Al | 238 | 60 | 30 | 200,000 |
| | | 80 | " | 500,000 |
| | | 100 | " | 700,000 |
| | | 120 | " | 700,000 |
| | | 100 | 20 | 800,000 |
| | | " | 50 | 500,000 |
| | | " | 100 | 300,000 |
| | | " | 150 | 200,000 |
| Au | 319 | 100 | 30 | 700,000 |
| Ag | 428 | " | " | 750,000 |
| Cu | 403 | " | " | 750,000 |
| W | 177 | " | " | 500,000 |
| Mo | 143 | " | " | 400,000 |
| Fe | 83.5 | " | " | 150,000 |

In Table 1, the number of rewriting cycles reached more than 300,000 when the thermal conductivity of the reflection layer was higher than 100 W/mK and the thickness thereof was more than 80 nm. The thermal conductivity of the reflection layer is preferably 200 W/mK or more.

Moreover, the thermal conductivity of the reflection layer is preferably 500 W/mK or lower. This is because if the thermal conductivity is higher than 500 W/mK, a temperature gradient in the thickness direction of the second protective layer becomes steep and, as a result, the thermal stress applied to the second protective layer increases and exceeds a mechanical strength to cause the formation of cracks in the second protective layer.

When the thickness of the reflection layer is more than 200 nm, the rate of dissipation of heat from the active layer becomes constant. From the point of productivity, a thinner reflection layer is preferred. Thus, the thickness of the reflection layer is preferably less than 200 nm.

Materials for the reflection layer are preferably those which comprise at least one element selected from Ag, Au, Al, Cu, W, Mo, and Zn, more preferably those which comprise at least one element selected from Ag, Au, Al, Cu, and W.

According to the experiment, the thickness of the second protective layer is preferably 100 nm or less, more preferably 50 nm or less. If the thickness of the second protective layer is too thick, the effect of heat dissipating from the active layer through the reflection layer is inhibited. The thickness of the second protective layer is required to be 5 nm or more because a strength to stand thermal stress is necessary. Since the second protective layer is positioned between the active layer which is a heat source and the reflection layer which is a heat sink, the temperature gradient in the thickness direction becomes steep to increase thermal stress applied.

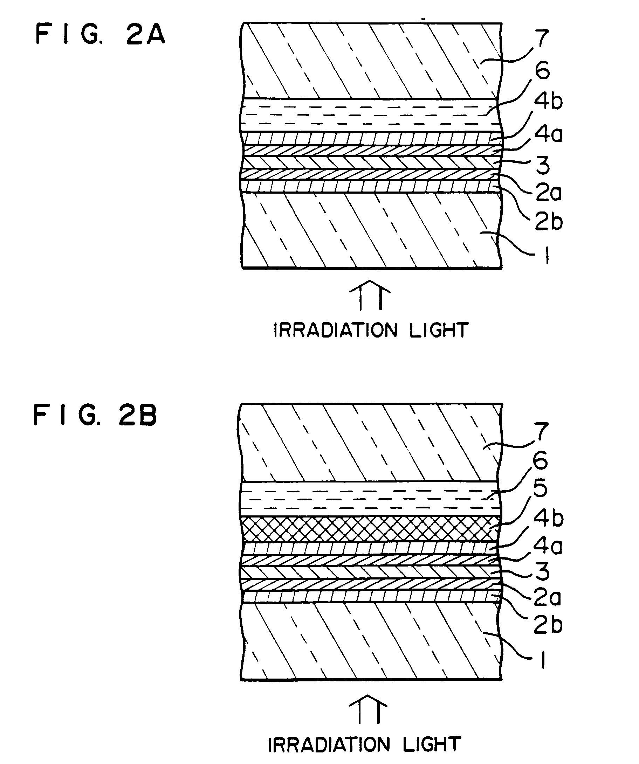

Next, the second example will be shown. The cross-section of the optical information recording medium of this example is shown in Fig. 2(a) and (b).

In Fig. 2(a), 1 indicates a substrate comprising polycarbonate resin, glass or the like. On this substrate 1 are successively formed respective layers by a vacuum thin film forming method such as a sputtering. First, the first protective layer is formed on substrate 1. This first protective layer comprises low expansion layer 2a and high expansion layer 2b, and the high expansion layer 2b is formed adjacent to substrate 1 and low expansion layer 2a is formed on the high expansion layer 2b. Active layer 3 is formed on low expansion layer 2a and thereon is formed the second protective layer. The second protective layer has a bi-layer structure and comprises low expansion layer 4a and high expansion layer 4b in this order from the side of active layer 3.

Furthermore, protective plate 7 is bonded to high expansion layer 4b through adhesive 6. Recording of information is carried out by irradiating light to active layer 3 from the lower side.

In Fig. 2(b), reflection layer 5 is further formed on high expansion layer 4b of the second protective layer and then the reflection layer 5 is bonded to protective plate 7 through adhesive 6 in Fig. 2(a).

In this way, first protective layers 2a and 2b and second protective layers 4a and 4b are respectively formed of two layers different in coefficient of linear expansion and the protective layers comprising two layers are respectively formed of the layer having a low coefficient of linear expansion on the side of active layer 3 and the layer having a high coefficient of linear expansion on the opposite side. When the temperature of active layer 3 is elevated by irradiation of active layer 3 with light, the deformation of protective layers due to thermal expansion can be inhibited. This is for the following reasons. The amount of thermal expansion $\Delta 1$ is given by the product of a coefficient of linear expansion $\underline{a}$ and change in temperature $\Delta T$ and an original length $l_0$. Further, a temperature in the optical information recording medium lowers with increase in distance from active layer 3 in thickness direction. Therefore, low expansion layer 2a or 4a on the side of active layer 3 is low in a coefficient of linear expansion and is great in change in temperature $\Delta T$ while high expansion layer 2b or 4b on the opposite side is large in the amount of a thermal expansion a and small in change in temperature $\Delta T$. That is, the amounts of thermal expansion of low expansion layer 2a and high expansion layer 2b of the first protective layer are close to each other or amounts of low expansion layer 4a and high expansion layer 4b of the second protective layer are close to each other and thus the bimetal effect is relaxed and the deformation of the first protective layer and the second protective layer on the active layer side in convex form is inhibited. This decreases the amount of the material of the active layer molten by irradiation of light to active layer 3 and forced out by deformation of the first and second protective layers. As a result, generation of pinholes is inhibited to increase the number of rewriting cycles.

As materials for the protective layer of a low coefficient of linear expansion, there are, for example, silicon compounds such as $SiO_2$ of 5.5 x $10^{-7}$/K, $Si_3N_4$ of 3.6 x $10^{-6}$/K, and SiC of 3.7 x $10^{-6}$/K. On the other hand, as inorganic materials for the protective layer which have a coefficient of linear expansion of higher than 5 x $10^{-6}$/K, there are, for example, ZnS, $TiO_2$, $Ta_2O_5$, $Y_2O_3$, and $ZrO_2$, which have a coefficient of linear expansion of 7.5 x $10^{-6}$/K, 7.5 x $10^{-6}$/K, 7.7 x $10^{-6}$/K, 8.5 x $10^{-6}$/K, and 8.8 x $10^{-6}$/K, respectively.

Materials for the protective layer of a bi-layer structure which are different in coefficient of linear expansion are preferably both inorganic materials because the adhesion between the two protective layers is high and peeling due to shearing force caused by thermal expansion does not occur.

Relation between the thickness of $SiO_2$ and the number of rewriting cycles when $SiO_2$ was used as protective layer on the active layer side and ZnS was used as protective layer on the opposite side is shown in Table 3. In this case, the active layer comprised GeTeSb and had a thickness of 20 nm, the reflection layer comprised Al and had a thickness of 100 nm, the first protective layer had a total thickness of 140 nm, and the second protective layer had a total thickness of 240 nm.

Experiment was conducted by measuring the bit error rate by overwriting a random pattern signal of (2,7)RLLC when the maximum recording frequency reached 3.43 MHz by irradiating a laser beam of 830 nm stopped-down to a spot diameter of 1 $\mu$m to the optical information recording medium rotating at 1800 rpm. The bit error rate was obtained by bit-by-bit comparing the amount of information to be recorded in the optical information recording medium with the reproduced amount of the recorded information. The number of rewriting cycles was defined to be the number until the bit error rate reached the order of $10^{-4}$. Rewriting was carried out 1,000,000 times maximum. Initial value was the order of $10^{-6}$.

Table 2

| Thickness of $SiO_2$ layer (nm) | The number of rewriting cycles (time) |
| --- | --- |
| 0 | 500,000 |
| 5 | 50,000 |
| 10 | 600,000 |
| 15 | 800,000 |
| 20 | 1,000,000 |
| 25 | 1,000,000 |
| 30 | 1,000,000 |

From Table 2, it is seen that $SiO_2$ is required to have a thickness of 10 nm or more, preferably 20 nm or more. That is, the thickness of the low expansion layer of the protective layer of bi-layer structure on the active layer side is 10 nm or more, preferably 20 nm or more. The thickness of this low expansion layer is preferably 50 nm or less. The first protective layer and the second protective layer are adjacent to the active layer and hence, have an action to adjust the amount of heat conduction from active layer and this amount of heat conduction affects the amount of energy of irradiation light introduced at the time of recording and erasing of information in an optical information recording medium. Therefore, in order to optionally select the amount of heat conduction of the first and second protective layers having a bi-layer structure of low and high expansion layers, the first and second protective layers must undergo influences of not only the heat conduction characteristics of the low expansion layer on the active layer side, but also those of the high expansion layer on the opposite side. From the experiments it is seen that when the thickness of the low expansion layer of each protective layer is more than 50 nm, the same results are obtained as when the protective layer is of a mono-layer structure comprising only material of the low expansion layer.

In the experiments shown in Table 2, second protective layer 4 was thick, namely, had a thickness of 240 nm, but it can be thin, namely, can have a thickness of 30 nm. Moreover, in Table 2, first protective layers 2a and 2b and second protective layers 4a and 4b were both of a bi-layer structure, but at least the first protective layers 2a and 2b which undergo much heat impulse should be of a bi-layer structure.

Next, the third example will be explained.

The structure of the optical information recording medium is as shown in Fig. 1(a) and (b). That is, in Fig. 1(a), on substrate 1 are laminated first protective layer 2, active layer 3, and second protective layer 4 in this order from the side of light irradiation and the resulting laminate is bonded to protective plate 7 through adhesive 6. In Fig. 1(b), reflection layer 5 is further laminated on the second protective layer 4 and this is bonded to protective plate 7 through adhesive 6, being different from the optical information recording medium shown in Fig. 1(a).

In the second example, the bimetal deformation of the protective layer caused when active layer 3 was heated by irradiation of light was inhibited by employing protective layer 2 of a bi-layer structure while in the third example, a coefficient of linear expansion in thickness direction is changed continuously by continuously changing a composition in thickness direction without employing any protective layer of a bi-layer structure. Specifically, the coefficient of linear expansion of the protective layer is made smaller on the active layer side and is increased with going away from the active layer side.

For example, a mixed material of ZnS and $SiO_2$ is used as protective layer and the composition is continuously changed with an $SiO_2$ content in the active layer side being 30 mol% and an $SiO_2$ content in the opposite side being 15 mol%. As a method for the formation of this protective layer, there is a co-sputtering method in which separate targets are provided for ZnS and $SiO_2$ and a compositional ratio is controlled by adjusting the deposition rates of ZnS and $SiO_2$ by controlling a power to be applied. An optical information recording medium was prepared which was comprised of an active layer of GeTeSb type having a thickness of 20 nm, a reflection layer of Al having a thickness of 100 nm, the first protective layer having a thickness of 140 nm and the second protective layer having a thickness of 240 nm and the bit error rate was measured to find that the number of rewriting cycles was more than 1,000,000. The bit error rate was measured by using a random pattern signal of (2,7)RLLC in case of the maximum recording frequency reaching 3.43 MHz when the optical information recording medium was rotated at 1800 rpm and a laser beam of 830 nm in wavelength with a spot diameter of 1 µm was converged onto the active layer. The bit error rate was obtained by bit-by-bit comparing the amount of information to be recorded in the optical information recording medium with the reproduced amount of the recorded information.

A material for the protective layer may be a mixture of a zinc chalcogenide other than ZnS such as ZnSe or ZnTe with $SiO_2$.

The forth example of the present invention will be explained. The structure of the optical information recording medium is as shown in Fig. 1(b). That is, in Fig. 1(b), from the side of irradiation with light, there are substrate 1 and, laminated thereon, first protective layer 2, active layer 3, second protective layer 4, and reflection layer 5 and this is bonded to protective layer 7 through adhesive 6. In this example, even when the thickness of active layer 3 is not constant, the maximum temperature of active layer 3 is made constant.

The thick portion of active layer 3 is large in thermal capacity and the thin portion is small in thermal capacity. Therefore, when the same energy is supplied to active layer 3, the thick portion is low in the maximum temperature and thin portion is high in the maximum temperature. Therefore, when a recording light enters into active layer 3, a temperature distribution in active layer 3 becomes ununiform in the direction of recording track. Furthermore, in the thinner portion of active layer 3, the material of the active layer melts for a longer time and so the material easily moves. Thus, the thin portion of active layer 3 further becomes thinner and ununiformity in the thickness of active layer 3 is further conspicuous. On the other hand, in this example, even if the thickness of active layer 3 is not constant, the maximum temperature of active layer 3 is nearly constant and so ununiformity in the thickness of active layer does not becomes higher.

Next, a method for making the maximum temperature of the active layer nearly constant against the changing of the thickness of active layer 3 will be explained.

When an energy of irradiation light is referred to as Q, absorption rate of light of active layer 3 is referred to as A, thermal capacity of active layer 3 is referred to as Ma, and change in temperature is referred to as $\Delta T$, there is the following relation in stationary state.

$$AQ = Ma\Delta T \tag{1}$$

The thermal capacity is given by the product of density, specific heat and volume. Since the areas of the respective layers are equal, when the thermal capacity, density, specific heat and thickness of layer are referred to as M, C and d, respectively, the following relation results.

$$M \propto \rho cd \tag{2}$$

Since energy supplied by irradiated light does not change and the maximum temperature of active layer 3 is also made constant, Q = constant and $\Delta T$ = constant and from the relation of formula (2),

$$A \propto da \tag{3}.$$

Therefore, although the actual phenomenon is in a non-stationary state where heat diffuses, it is desired as optical information recording medium to have such a structure that the light absorption rate increases with increase in the thickness of the active layer.

Specific materials and optical properties of the optical information recording medium will be explained.

An optical information recording medium is considered in which substrate 1 comprises a polycarbonate resin, material of active layer 3 is of GeTeSb type and the material of reflection layer 5 is an Al alloy. The polycarbonate resin has a complex refractive index (n, k) of (1.58, 0), the active layer before and after recording has (5.7, 3.4) and (4.9, 1.4), respectively and the reflection layer has (1.9, 6.9) for wavelength $\lambda$ = 830 nm. The complex refractive index of first protective layer 2 and that of second protective layer 4 are identical and (2.0, 0). The thickness of active layer 3 is 20 nm and that of the reflection layer is 100 nm.

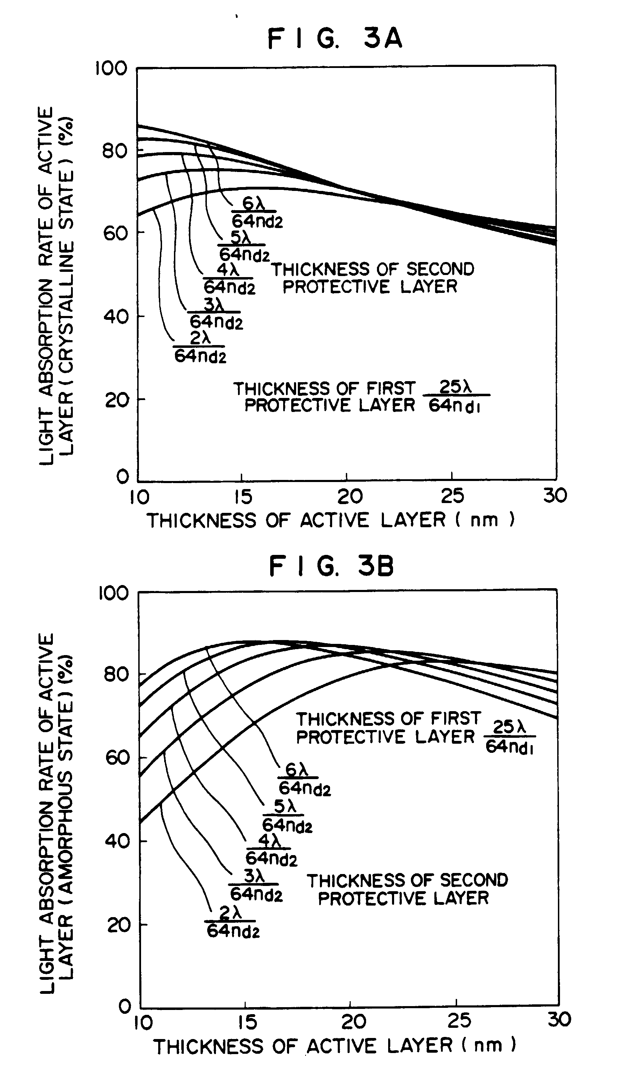

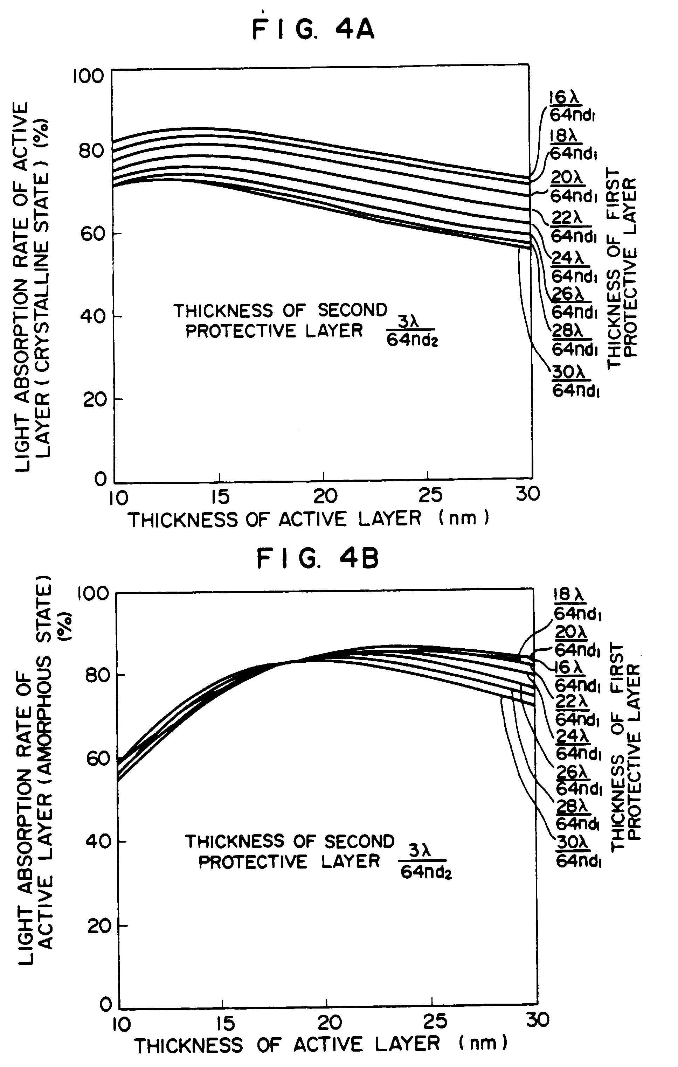

Fig. 3(a), (b) and Fig. 4(a), (b) show relation between the light absorption rate and thickness of the active layer where the refractive index of first protective layer 2 is indicated by $n_{d1}$, the refractive index of second protective layer 4 is indicated by $n_{d2}$, and the wavelength of recording light is indicated by $\lambda$. Parameters in Fig. 3(a), (b) are the thickness of second protective layer 4 and the thickness of first protective layer 2 is constant of $25\lambda/64n_{d1}$. Parameters

in Fig. 4(a), (b) are the thickness of first protective layer 2 and the thickness of second protective layer 4 is constant of $3\lambda/64n_{d2}$. Fig. 3(a) and Fig. 4(a) show the case where the active layer is in a crystalline state and Fig. 3(b) and Fig. 4(b) show the case where the active layer is in an amorphous state.

Table 3 shows a relation between the thickness of first protective layer 2 and second protective layer 4 and the number of rewriting cycles when a mixture of ZnS and $SiO_2$ is used as material for these protective layers. The content of $SiO_2$ is 20 mol%.

It is seen from Table 3 that it is when the thickness of first protective layer 2 is in the range of $20\lambda/64n_{d1}$ to $27\lambda/64n_{d1}$ and the thickness of second protective layer 4 is $5\lambda/64n_{d2}$ or less that the number of rewriting cycles is more than 500,000. Second protective layer 4 must have $\lambda/64n_{d2}$ or more for the inhibition of mutual diffusion between active layer 3 and reflection layer 5.

Table 3

| Thickness of first protective layer $(x\lambda/64n_{d1})$ | Thickness of second protective layer $(x\lambda/64n_{d2})$ | The number of rewriting cycles (time) |
|---|---|---|
| 15 | 3 | 150,000 |
| 18 | " | 350,000 |
| 20 | " | 700,000 |
| 25 | " | 1,000,000 |
| 27 | " | 700,000 |
| 30 | " | 400,000 |
| 25 | 2 | 1,000,000 |
| " | 3 | 1,000,000 |
| " | 4 | 850,000 |
| " | 5 | 650,000 |
| " | 6 | 400,000 |

The similar experiments were conducted with fixing the thickness of first protective layer 2 at $25\lambda/64n_{d1}$, and that of second protective layer 4 at $3\lambda/64n_{d2}$ and changing the initial thickness of active layer 3 to find that the bit error rate was in the order of $10^{-6}$ or $10^{-5}$ even if the number of rewriting cycles was 1,000,000 at a thickness of active layer 3 of 18-25 nm. Measurement of this bit error rate was conducted by overwriting the optical information recording medium with a random pattern signal of (2,7)RLLC when the maximum recording frequency reaches 3.43 MHz by irradiating the active layer of the optical information recording medium rotated at 1800 rpm with a laser beam of 830 nm stopped-down to a spot diameter of 1 μm. The bit error rate was obtained by bit-by-bit comparing the amount of information to be recorded in the optical information recording medium with the reproduced amount of the recorded information.

When the thickness of the reflection layer is 80 nm or more, the light absorption rate in the active layer is saturated. Therefore, the thickness of reflection layer is preferably 80 nm or more. The thickness of the reflection layer of 200 nm or less is sufficient. This is because the action of the reflection layer to take heat from the active layer or protective layer saturates at a thickness of 200 nm or more.

Materials for the protective layer preferably have a refractive index of about 2 or more. This is in order to obtain a change in quantity of reflected light corresponding to a change of the phase state of the active layer utilizing the interference effect of light at the first protective layer between substrate and active layer and the substrate. For this purpose, the refractive index of the protective layer must differ from that of the substrate. The materials for the protective layer include those which are mainly composed of ZnS, $Sb_2S_3$, CdS, ZnSe, ZnTe, $Si_3N_4$, AlN, SiC, $Bi_2O_3$, $CeO_2$, $Cr_2O_3$, $GeO_2$, $Nd_2O_3$, $Sb_2O_3$, $SnO_2$, TiO, $TiO_2$, $WO_2$, and $ZrO_2$. Preferred are those which are mainly composed of ZnS, ZnSe, ZnTe, $Si_3N_4$, AlN, and SiC.

## Claims

1. An optical information recording medium which comprises an active layer (3) which undergoes phase change upon irradiation with light, protective layers (2, 4) which are formed on both the sides of the active layer (3) and which have a higher melting point than that of the active layer (3) and show no absorption at the wavelength of the irradiated light and a reflection layer (5) which is formed on the protective layer (4) which has a thickness of 100 nm or less on the side of the active layer (3), characterized in that said reflection layer (5) has a thickness of 80 nm or more and has a thermal conductivity of 100 W/mK or higher.

**EP 0 404 005 B1**

2. An optical information recording medium according to claim 1, wherein the material of the reflection layer (5) comprises at least one element selected from the group consisting of Ag, Au, Al, Cu and W.

3. An optical information recording medium which comprises an active layer (3) which undergoes phase change upon irradiation with light, protective layers (2a, 2b, 4a, 4b) which are formed on both the sides of the active layer (3) and which have a higher melting point than that of the active layer (3) and show no absorption at the wavelength of the irradiated light, at least the protective layer (2a, 2b) on the side to be irradiated with light being of a bi-layer structure, characterized in that a coefficient of linear expansion of the layer (2a, 4a) of the bi-layer structure on the side of the active layer (3) is smaller than that of another layer (2b, 4b) of the bi-layer structure.

4. An optical information recording medium according to claim 3, wherein the material of the layer which constitutes the protective layer (2a, 4a) of a bi-layer structure and which is on the side of the active layer (3) comprises a silicon compound.

5. An optical information recording medium according to claim 3, wherein the layer (2a, 4a) which constitutes the protective layer of a bi-layer structure and which is on the side of the active layer (3) has a thickness of 10 nm or more.

6. An optical information recording medium which comprises an active layer (3) which undergoes phase change upon irradiation with light and protective layers (2, 4) which are formed on both the sides of the active layer (3) and which have a higher melting point than that of the active layer (3) and show no absorption at the wavelength of the irradiated light, characterized in that at least the protective layer (2) which is formed on the side to be irradiated with light has a coefficient of linear expansion which is low on the side of the active layer (3) and continuously increases with increase in distance from the active layer (3).

7. An optical information recording medium according to claim 6, wherein the material of the protective layer (2, 4) comprises a mixture of $SiO_2$ and at least one member selected from the group consisting of ZnS, ZnSe and ZnTe.

8. An optical information recording medium which comprises an active layer (3) which undergoes phase change upon irradiation with light, protective layers (2, 4) which are formed on both the sides of the active layer (3) and which have a higher melting point than that of the active layer (3) and show no absorption at the wavelength of the irradiated light and a reflection layer (5) which is formed on the protective layer (4) on the side opposite the side to be irradiated with light and which reflects back the light to the active layer (3), characterized in that the thickness of the active layer (3) is 18 nm to 25 nm, the thickness of the protective layer (2) on the side to be irradiated with light is $20\lambda/64n_{d1}$ to $27\lambda/64n_{d1}$ and the thickness of the protective layer (4) on the opposite side is $\lambda/64n_{d2}$ to $5\lambda/64n_{d2}$ wherein $\lambda$ indicates the wavelength of the irradiated light, $n_{d1}$ indicates the refractive index of the protective layer (2) on the side to be irradiated with light and $n_{d2}$ indicates the refractive index of the protective layer (4) on the opposite side.

9. An optical information recording medium according to claim 8, wherein the reflection layer (5) has a thickness of 80 nm or more.

10. An optical information recording medium according to anyone of claims 8 and 9, wherein the material of the active layer (3) is mainly composed of a GeTeSb type material.

**Patentansprüche**

1. Optisches Informationsaufzeichnungsmedium, welches eine aktive Schicht (3), deren Phase sich bei Bestrahlung mit Licht verändert, Schutzschichten (2, 4), die auf beiden Seiten der aktiven Schicht (3) ausgebildet sind und die einen höheren Schmelzpunkt haben als derjenige der aktiven Schicht (3) und keine Absorption bei der Wellenlänge des aufgestrahlten Lichts zeigen, und eine Reflexionsschicht (5) umfaßt, die auf der Schutzschicht (4) ausgebildet ist, die eine Dicke von 100 nm oder weniger auf der Seite der aktiven Schicht (3) hat, dadurch gekennzeichnet, daß die Reflexionsschicht (5) eine Dicke von 80 nm oder mehr hat und eine Wärmeleitfähigkeit von 100 W/mK oder höher hat.

2. Optisches Informationsaufzeichnungsmedium nach Anspruch 1, bei welchem das Material der Reflexionsschicht (5) mindestens ein Element umfaßt, das ausgewählt ist aus der Gruppe bestehend aus Ag, Au, Al, Cu und W.

3. Optisches Informationsaufzeichnungsmedium, welches eine aktive Schicht (3), deren Phase sich bei der Bestrahlung mit Licht verändert, und Schutzschichten (2a, 2b, 4a, 4b)umfaßt, die auf beiden Seiten der aktiven Schicht (3) ausgebildet sind und die einen höheren Schmelzpunkt als derjenige der aktiven Schicht (3) haben und keine Absorption bei der Wellenlänge des aufgestrahlten Lichts zeigen, wobei mindestens die Schutzschicht (2a, 2b) auf der mit Licht zu bestrahlenden Seite eine Zweischichtstruktur hat, dadurch gekennzeichnet, daß ein linearer Expansionskoeffizient der Schicht (2a, 4a) der Zweischichtstruktur auf der Seite der aktiven Schicht (3) kleiner ist als derjenige der anderen Schicht (2b, 4b) der Zweischichtstruktur.

4. Optisches Informationsaufzeichnungsmedium nach Anspruch 3, bei welchem das Material der Schicht, die die Schutzschicht (2a, 4a) der Zweischichtstruktur bildet und die auf der Seite der aktiven Schicht (3) ist, eine Siliziumverbindung umfaßt.

5. Optisches Informationsaufzeichnungsmedium nach Anspruch 3, bei welchem die Schicht (2a, 4a), die die Schutzschicht der Zweischichtstruktur bildet und die auf der Seite der aktiven Schicht (3) ist, eine Dicke von 10 nm oder mehr hat.

6. Optisches Informationsaufzeichnungsmedium, welches eine aktive Schicht (3), deren Phase sich bei der Bestrahlung mit Licht verändert, und Schutzschichten (2, 4) umfaßt, die auf beiden Seiten der aktiven Schicht (3) ausgebildet sind und die einen höheren Schmelzpunkt als derjenige der aktiven Schicht (3) haben und keine Absorption bei der Wellenlänge des aufgestrahlten Lichts zeigen, dadurch gekennzeichnet, daß mindestens die Schutzschicht (2), die auf der mit Licht zu bestrahlenden Seite ausgebildet ist, einen linearen Expansionskoeffizienten hat, der auf der Seite der aktiven Schicht (3) niedrig ist und mit zunehmendem Abstand von der aktiven Schicht (3) kontinuierlich zunimmt.

7. Optisches Informationsaufzeichnungsmedium nach Anspruch 6, bei welchem das Material der Schutzschicht (2, 4) eine Mischung von $SiO_2$ und mindestens einem Element umfaßt, das ausgewählt ist aus der Gruppe bestehend aus ZnS, ZnSe und ZnTe.

8. Optisches Informationsaufzeichnungsmedium, welches eine aktive Schicht (3), deren Phase sich bei der Bestrahlung mit Licht verändert, Schutzschichten (2, 4), die auf beiden Seiten der aktiven Schicht (3) gebildet sind und die einen höheren Schmelzpunkt als derjenige der aktiven Schicht (3) haben und keine Absorption bei der Wellenlänge des aufgestrahlten Lichts zeigen, und eine Reflexionsschicht (5) umfaßt, die auf der Schutzschicht (4) auf der der mit Licht zu bestrahlenden Seite entgegengesetzten Seite ausgebildet ist und die das Licht zu der aktiven Schicht (3) reflektiert, dadurch gekennzeichnet, daß die Dicke der aktiven Schicht (3) 18 nm bis 25 nm beträgt, die Dicke der Schutzschicht (2) auf der mit Licht zu bestrahlenden Seite $20\lambda/64n_{d1}$ bis $27\lambda/64n_{d1}$ beträgt und die Dicke der Schutzschicht (4) auf der entgegengesetzten Seite $\lambda/64n_{d2}$ bis $5\lambda/64n_{d2}$ beträgt, wobei $\lambda$ die Wellenlänge des aufgestrahlten Lichts bezeichnet, $n_{d1}$ den Brechungsindex der Schutzschicht (2) auf der mit Licht zu bestrahlenden Seite bezeichnet und $n_{d2}$ den Brechungsindex der Schutzschicht (4) auf der entgegengesetzten Seite bezeichnet.

9. Optisches Informationsaufzeichnungsmedium nach Anspruch 8, bei welchem die Reflexionsschicht (5) eine Dicke von 80 nm oder mehr hat.

10. Optisches Informationsaufzeichnungsmedium nach einem der Ansprüche 8 oder 9, bei welchem das Material der aktiven Schicht (3) hauptsächlich aus einem Material des GeTeSb-Typs zusammengesetzt ist.

## Revendications

1. Support d'enregistrement d'information optique qui comprend une couche active (3) qui subit un changement de phase suite à une exposition à un rayonnement lumineux, des couches de protection (2, 4) qui sont formées sur les deux côtés de la couche active (3) et qui présentent un point de fusion plus élevé que celui de la couche active (3) et qui ne réalisent pas d'absorption pour la longueur d'onde du rayonnement lumineux et une couche de réflexion (5) qui est formée sur la couche de protection (4) qui présente une épaisseur de 100 nm ou moins sur le côté de la couche active (3), caractérisé en ce que ladite couche de réflexion (5) présente une épaisseur de 80 nm ou plus et une conductivité thermique de 100 W/mK ou plus.

2. Support d'enregistrement d'information optique selon la revendication 1, dans lequel le matériau de la couche de réflexion (5) comprend au moins un élément choisi parmi le groupe constitué par Ag, Au, Al, Cu et W.

3. Support d'enregistrement d'information optique qui comprend une couche active (3) qui subit un changement de phase suite à une exposition à un rayonnement lumineux, des couches de protection (2a, 2b, 4a, 4b) qui sont formées sur les deux côtés de la couche active (3) et qui présentent un point de fusion plus élevé que celui de la couche active (3) et qui ne réalisent pas d'absorption pour la longueur d'onde de la lumière émise, au moins la couche de protection (2a, 2b) sur le côté devant être exposé au rayonnement lumineux ayant une structure bicouche, caractérisé en ce que le coefficient de dilatation linéaire de la couche (2a, 4a) de la structure bicouche sur le côté de la couche active (3) est inférieur à celui de l'autre couche (2b, 4b) de la structure bicouche.

4. Support d'enregistrement d'information optique selon la revendication 3, dans lequel le matériau de la couche, qui constitue la couche de protection (2a, 4a) ayant une structure bicouche et qui est sur le côté de la couche active (3), comprend un composé de silicium.

5. Support d'enregistrement d'information optique selon la revendication 3, dans lequel la couche (2a, 4a), qui constitué la couche de protection ayant une structure bicouche et qui est sur le côté de la couche active (3), présente une épaisseur de 10 nm ou plus.

6. Support d'enregistrement d'information optique comprenant une couche active (3) qui subit un changement de phase suite à une exposition à un rayonnement lumineux et des couches de protection (2, 4) qui sont formées sur les deux côtés de la couche active (3) et qui présentent un point de fusion plus élevé que celui de la couche active (3) et qui ne réalisent pas d'absorption pour la longueur d'onde du rayonnement lumineux, caractérisé en ce qu'au moins la couche de protection (2), qui est formée sur le côté destiné à être exposé à un rayonnement lumineux, présente un coefficient de dilatation linéaire qui est faible sur le côté de la couche active (3) et qui augmente en continu lorsque la distance par rapport à la couche active (3) augmente.

7. Support d'enregistrement d'information optique selon la revendication 6, dans lequel le matériau de la couche de protection (2, 4) comprend un mélange de $SiO_2$ et d'au moins un élément choisi parmi le groupe constitué par ZnS, ZnSe et ZnTe.

8. Support d'enregistrement d'information optique comprenant une couche active (3) qui subit un changement de phase suite à une exposition à un rayonnement lumineux, des couches de protection (2, 4) qui sont formées sur les deux côtés de la couche active (3) et qui présentent un point de fusion plus élevé que celui de la couche active (3) et qui ne réalisent pas d'absorption pour la longueur d'onde du rayonnement lumineux et une couche de réflexion (5) qui est formée sur la couche de protection (4), sur le côté opposé au côté destiné à être exposé à un rayonnement lumineux, et qui réfléchit en retour la lumière vers la couche active (3), caractérisé en ce que l'épaisseur de la couche active (3) est comprise entre 18 nm et 25 nm, l'épaisseur de la couche de protection (2) sur le côté destiné à être exposé à un rayonnement lumineux est comprise entre $20\lambda/64n_{d1}$ et $27\lambda/64n_{d1}$ et l'épaisseur de la couche de protection (4) sur le côté opposé est comprise entre $\lambda/64n_{d2}$ et $5\lambda/64n_{d2}$, où $\lambda$ indique la longueur d'onde du rayonnement lumineux, $n_{d1}$ indique l'indice de réfraction de la couche de protection (2) sur le côté destiné à être exposé à un rayonnement lumineux et $n_{d2}$ indique l'indice de réfraction de la couche de protection (4) sur le côté opposé.

9. Support d'enregistrement d'information optique selon la revendication 8, dans lequel la couche de réflexion (5) présente une épaisseur de 80 nm ou plus.

10. Support d'enregistrement d'information optique selon l'une quelconque des revendications 8 et 9, dans lequel le matériau de la couche active (3) est essentiellement constitué par un matériau du type GeTeSb.

FIG. IA

IRRADIATION LIGHT

FIG. IB

IRRADIATION LIGHT

F I G. 2A

IRRADIATION LIGHT

F I G. 2B

IRRADIATION LIGHT

# F I G. 3A

Y-axis: LIGHT ABSORPTION RATE OF ACTIVE LAYER ( CRYSTALLINE STATE ) (%)

X-axis: THICKNESS OF ACTIVE LAYER ( nm )

$\dfrac{6\lambda}{64nd_2}$

$\dfrac{5\lambda}{64nd_2}$

$\dfrac{4\lambda}{64nd_2}$

$\dfrac{3\lambda}{64nd_2}$

$\dfrac{2\lambda}{64nd_2}$

THICKNESS OF SECOND PROTECTIVE LAYER

THICKNESS OF FIRST PROTECTIVE LAYER $\dfrac{25\lambda}{64nd_1}$

# F I G. 3B

Y-axis: LIGHT ABSORPTION RATE OF ACTIVE LAYER ( AMORPHOUS STATE ) (%)

X-axis: THICKNESS OF ACTIVE LAYER ( nm )

THICKNESS OF FIRST PROTECTIVE LAYER $\dfrac{25\lambda}{64nd_1}$

$\dfrac{6\lambda}{64nd_2}$

$\dfrac{5\lambda}{64nd_2}$

$\dfrac{4\lambda}{64nd_2}$

$\dfrac{3\lambda}{64nd_2}$

$\dfrac{2\lambda}{64nd_2}$

THICKNESS OF SECOND PROTECTIVE LAYER

# F I G. 4A

# F I G. 4B